## Europäisches Patentamt
## European Patent Office
## Office européen des brevets

(11) Veröffentlichungsnummer: **0 010 539**
**B1**

(12) **EUROPÄISCHE PATENTSCHRIFT**

(45) Veröffentlichungstag der Patentschrift:
27.01.82

(51) Int. Cl.³: **G 01 F 23/26, B 22 D 11/16**

(21) Anmeldenummer: **79930027.2**

(22) Anmeldetag: **19.10.79**

(54) Verfahren zur Messung des Füllstandes von flüssigen Metallen in Gefässen, insbesondere in Stranggiesskokillen.

(30) Priorität: **25.10.78 LU 80410**

(43) Veröffentlichungstag der Anmeldung:
**30.04.80 Patentblatt 80/9**

(45) Bekanntmachung des Hinweises auf die Patenterteilung:
**27.01.82 Patentblatt 82/4**

(84) Benannte Vertragsstaaten:
**BE DE FR GB IT**

(56) Entgegenhaltungen:
**FR-A-2 238 920**
**FR-A-2 251 811**
**FR-A-2 348 477**
**LU-A-74 453**
**US-A-3 366 873**
**US-A-3 519 060**
**IBM TECHNICAL DISCLOSURE BULLETIN, Vol. 19, Nr. 10, März 1977, New York, US, R. W. ARNOLD et al.: »Magnetic ink level detector«, Seiten 3694—3696**

(73) Patentinhaber: **ARBED S.A., Avenue de la Liberté 19, L-2930 Luxembourg (LU)**

(72) Erfinder: **Block, F.R., Dr.rer.nat., Kalfstrasse 58, D-5106 Roetgen (DE)**

(74) Vertreter: **Neyen, René, Administration Centrale de l'Arbed Case postale 1802, L-2930 Luxembourg (LU)**

## Verfahren zur Messung des Füllstandes von flüssigen Metallen in Gefäßen, insbesondere in Stranggießkokillen

Die Erfindung bezieht sich auf ein Verfahren zur Messung des Füllstandes von flüssigem Metall in Gefäßen, insbesondere in einer Stranggießkokille, welches vorsieht, daß eine felderzeugende Primärspule und zwei symmetrisch zu dieser liegende, gegeneinander geschaltete gleichartige Sekundärspulen sowie das flüssige Metall eine Anordnung bilden, in der die Lage des Metallspiegels zu den Sekundärspulen in diesen eine Spannung hervorrufen kann, die man als Maß für den Füllstand verwendet.

Im Hinblick auf die Regelung der Zufuhrgeschwindigkeit von flüssigem Metall, sowie der Abzugsgeschwindigkeit ist es äußerst wichtig die Badspiegelhöhe in einer Stranggießkokille bestimmen zu können.

Hierzu verwendet man in der Regel radioaktive Meßmethoden, die sowohl aus Kostengründen als auch wegen der notwendigen Sicherheitsmaßnahmen Anlaß geben, nach neuen Meßverfahren zu suchen.

Es ist bekannt, daß durch Änderungen der einen Leiter durchsetzenden magnetischen Felder im Leiter Ströme induziert werden und daß aus den Sekundärfeldern dieser Ströme auf die Anwesenheit des Leiters geschlossen werden kann. Bekannt ist auch, daß sich die Impedanz einer Spule ändert, wenn man einen Leiter in das Feld der Spule bringt.

Eine Meßmethode, die auf diesen Erkenntnissen beruht, wird in dem Dokument FR-A-2 251 811 beschrieben und sieht vor, daß ein kontaktloses Induktionsmeßgerät die Lage der Grenze zwischen zwei Phasen bestimmt, die unterschiedliche Dichten sowie Leitungswiderstand aufweisen, wobei zumindest eine der Phasen den Strom leitet ohne magnetisch zu sein. Das Meßgerät weist Arbeits- sowie Meßspulen auf, die in offener Anordnung auf die besagte Grenze gerichtet sind. Wesentlich ist hierbei, daß das Meßsystem aus zwei offenen U-förmigen Magnetkernen besteht, die parallel zueinander angeordnet sind, wobei die Meßspulen gegeneinander geschaltet sind.

Doch versagen solche Meßmethoden beim Stranggießen von Stahl, da die gut leitende Kupferkokille die Felder so stark abschirmt, daß die Empfindlichkeit der Meßeinrichtung nicht befriedigen kann.

Der Einfluß des Gefäßes, z. B. der Kokille, wird ausgeschaltet, indem man bei einem Verfahren gemäß dem Oberbegriff des Patentanspruchs 1 erfindungsgemäß die Primärspule sowie die Sekundärspulen berührungslos koaxial um das Gefäß legt, zusätzlich zu der in den Sekundärspulen induzierten Spannung die Leitfähigkeit des flüssigen Metalls mißt und aus dem unter Berücksichtigung des gemessenen Leitfähigkeitswertes korrigierten Spannungswert die Lage des Metallspiegels bestimmt.

Der prinzipielle Aufbau einer solchen Meßmethode ist in Fig. 1 dargestellt. In Fig. 2 ist die Gesamtsekundärspannung in Abhängigkeit von der Lage des Badspiegels zu der Ebene zwischen den Spulen dargestellt und in Fig. 3 die Gesamtsekundärspannung in Abhängigkeit von der Lage.

Die Primärspule PI erzeugt ein magnetisches Wechselfeld, welches Ströme im flüssigen Eisen IE und in der Kolille IK und Spannung in den gegeneinandergeschalteten Sekundärspulen S1 und S2 erzeugt. Bei symmetrischer Anordnung ist in den beiden Spulen die Gesamtspannung, die aus dem magnetischen Primärfeld resultiert, gleich Null.

Die im Eisen und in der Kokille induzierten Ströme sind mit magnetischen Sekundärfeldern verbunden, die ebenfalls Spannungen in den gegeneinander geschalteten Sekundärspulen S1 und S2 induzieren. Aus Symmetriegründen verschwindet hierbei die Gesamtspannung, die aus dem magnetischen Feld resultiert, das in der Kolille durch das Primärfeld induziert wird, und nur bei Asymetrie des flüssigen Leiters zu den beiden Sekundärspulen, und damit der Felder der in ihm induzierten Ströme, wird in den beiden Sekundärspulen eine resultierende Spannung induziert.

Aus dieser Spannung gegenüber der angelegten Primärspannung kann dann auf den Füllstand geschlossen werden:

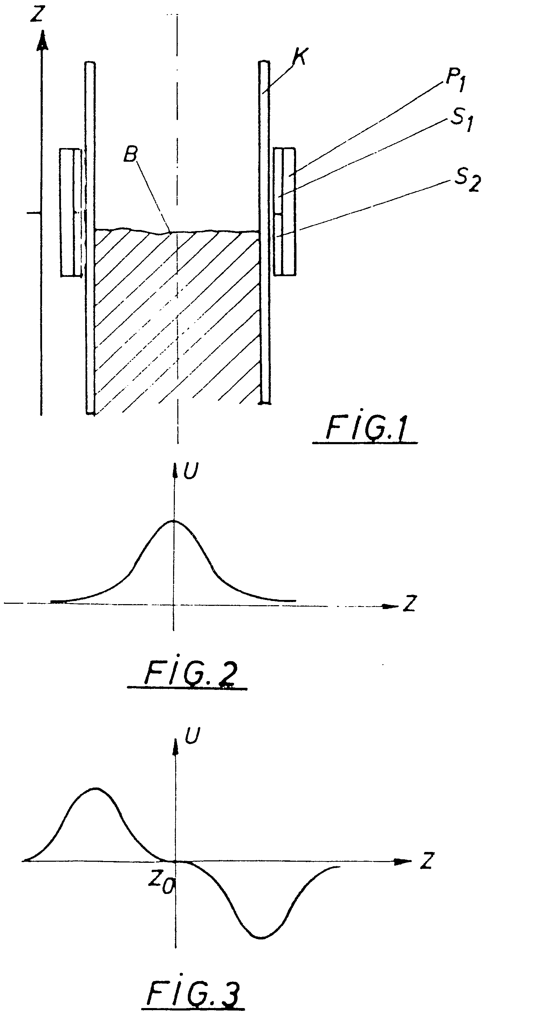

Befindet sich kein Metall in der Kokille, so ist die Gesamtsekundärspannung gleich Null. Steigt der Badspiegel, so werden bevorzugt in der unteren Spule Spannungen induziert, so daß die resultierende Spannung ansteigt. Bei maximaler Asymmetrie, also wenn sich der Badspiegel zwischen den Sekundärspulen befindet, wird auch ein Maximum der Gesamtsekundärspannung erzielt. Steigt der Badspiegel weiter an, so verschwinden Asymmetrie und Gesamtsekundärspannung wieder — siehe Fig. 2.

Wird die Spulenordnung an der Kokille befestigt, so wird — auch bei konstantem Badspiegel — aufgrund der Relativbewegung der Spule zum Bad bei jeder Oszillation des Hubtisches ein Bereich der Kurve 1 durchfahren.

Ist die Anordnung so gewählt, daß jeweils das Maximum überfahren wird, so ist durch das Maximum zusätzlich jeweils ein Eichwert gegeben. Denn selbstverständlich hängt die Meßspannung von der Stärke des Primärstromes — dessen Amplitude am einfachsten konstant gehalten wird — und von der Leitfähigkeit des Bades ab, auf die aus dem Wert des Maximums geschlossen werden kann.

Beim Anbau an einen Hubtisch wird die Frequenz des Primärstromes zweckmäßig groß gegenüber der der mechanischen Schwingung gewählt, die bei Stranggießanlagen für Stahl etwa 1 bis 2 Hz beträgt.

Das Meßgerät kann auch zur Bestimmung der Position eines Körpers, der sich nicht nur unter

oder in der Meßzone befinden kann, sondern auch darüber, dienen. Hier ergeben sich ein Nulldurchgang und ein Phasenwechsel der induzierten Spannung, sobald der Körper symmetrisch zu den Spulen liegt — siehe Fig. 3.

Für die Funktiontüchtigkeit der Anlage ist der symmetrische Aufbau in sich und zur Kokille notwendig. Er kann bei der hier vorgeschlagenen Anordnung einfach erzielt werden, indem die Spulen auf einen einzigen Träger aufgewickelt werden.

Eine beliebige in sich symmetrische Anordnung mit Spulenachse senkrecht zur Kokillenachse — also ein Aufbau ähnlich einer Förstersonde oder wie in dem US-Patent 3 366 873 beschrieben — kommt nicht in Betracht, da schon die geringste Neigung der Spulenordnung eine Abstandsänderung durch Verformung, z. H. bei Temperaturänderungen, dazu führen, daß die Felder der in der Kokille induzierten Ströme in der Sekundärspulenanordnung Gesamtspannungen induzieren, die groß gegenüber denen sind, die aus den Feldern der im Bad induzierten Ströme resultieren, so daß eine Messung unmöglich wird.

Bei dem erfindungsgemäßen Meßaufnehmer hingegen spielen Verschiebungen oder geringe Neigungen, sowie beliebige symmetrische Verformungen der Spulenanordnung keine Rolle.

Unter Verwendung des erfindungsgemäßen Meßaufnehmers sind verschiedene Methoden der Auswertung des Meßsignals möglich, z. B.:

1. durch Messung der induzierten Spannung, wobei in einer parallelen Messung die Leitfähigkeit überwacht wird;
2. falls der Meßaufnehmer, wie z. B. im Hubtisch einer Stranggießanlage, relativ zum Badspiegel oszilliert
   a) aus der Lage des Maximums relativ zur Position des Tisches
   b) aus der Differenz zu einem Referenzsignal, das aus der Position des Hubtisches relativ zum Laborsystem resultiert.

Die Gesamtspannung der Sekundärspulen kann man dadurch verändern, daß man die Wicklungslängen der beiden Spulen ein wenig unterschiedlich wählt oder durch eine Potentiometerschaltung die Anordnung verstimmt. Dadurch erreicht man in der Regel nicht nur eine Änderung des Betrages der Gesamtsekundärspannung, sondern auch ihrer Phase relativ zur Phase des Primärstromes. Nicht nur der Betrag der Gesamtsekundärspannung, sondern auch ihre Phasenlage relativ zur Phase des Primärstromes können zur Bestimmung der Lage des leitenden Körpers verwendet werden.

Besonders einfach ist dies für das in Fig. 3 gewählte Beispiel, hier sind die beiden Bereiche rechts und links vom Nulldurchgang dadurch zu unterscheiden, daß die Phasen sich um $\pi$ unterscheiden.

Gemäß einer Ausgestaltung der Erfindung bündelt man die Magnetfelder zur Flüssigkeit hin, indem man die drei Spulen mit einem U-förmigen Blechpaket umhüllt, das in Richtung auf die Achse offen ist. Weiter ist es sinnvoll, daß man in der Primärspule eine andere Frequenz als für das gleichzeitige elektromagnetische Rühren verwendet und daß man die durch die Felder des Rührinduktors induzierten Spannungen durch eine Frequenzanalyse abspaltet. Auch wird man das Primärfeld jeweils nur kurzzeitig einschalten und zwischendurch das von Fremdquellen herrührende Hintergrundrauschen analysieren und abspalten. Im Hinblick hierauf erzeugt man das Primärfeld nicht durch einen Strom, der in der Zeit harmonisch ist, sondern der einen für die Analyse geeigneten Verlauf hat, z. B. aus Rechteckimpulsen besteht.

Nach einer weiteren Ausgestaltung der Erfindung ist vorgesehen, daß die Stromimpulse durch die Position des Hubtisches getriggert werden.

Es ist auch vorgesehen, daß man eine geschlitzte Kokille mit hohen Übergangswiderständen zwischen den Teilen, die z. B. durch eingebrachte Isolierschichten, durch Oxidation oder Beschichten der Oberflächen erzielt werden, verwendet, so daß der Stromfluß in der Kokille und damit die zugehörigen Felder gemindert werden und daß geringere Anforderungen an die Symmetrie der Spulen zu stellen sind. Eine solche Kokille hat die Anmelderin in der DE-OS 2 838 564 beschrieben.

## Patentansprüche

1. Verfahren zum Messen des Füllstandes von flüssigen Metallen in Gefäßen, insbesondere Stranggießkokillen, welches vorsieht, das seine felderzeugende Primärspule und zwei symmetrisch zu dieser liegende, gegeneinander geschaltete gleichartige Sekundärspulen sowie das flüssige Metall eine Anordnung bilden, in der die Lage des Metallspiegels zu den Sekundärspulen in diesen eine induzierte Spannung hervorrufen kann, die gemessen wird, dadurch gekennzeichnet, daß man die Primärspule sowie die Sekundärspulen berührungslos koaxial um das Gefäß legt, daß man zusätzlich zu der in den Sekundärspulen induzierten Spannung die Leitfähigkeit des flüssigen Metalls mißt und daß man aus dem unter Berücksichtigung des gemessenen Leitfähigkeitswertes korrigierten Spannungswert die Lage des Metallspiegels bestimmt.

2. Verfahren nach dem Anspruch 1, dadurch gekennzeichnet, daß man die Felder zur Flüssigkeit hin bündelt, indem man die drei Spulen mit einem U-förmigen Blechpaket umhüllt, das in Richtung auf die Achse offen ist.

3. Verfahren nach den Ansprüchen 1—2, dadurch gekennzeichnet, daß man das Primärfeld jeweils nur kurzzeitig einschaltet und daß man zwischendurch das von Fremdquellen herrührende Hintergrundrauschen frequenzanalytisch erfaßt und eliminiert.

4. Verfahren nach den Ansprüchen 1—3, dadurch gekennzeichnet, daß man das Primärfeld im Hinblick auf die Frequenzanalyse mit einem nicht harmonischen und vorzugsweise aus Rechteckimpulsen bestehenden Strom erzeugt.

5. Verfahren nach den Ansprüchen 1—4, dadurch gekennzeichnet, daß man die Stromimpulse durch die Position des Gefäß-Hubtisches, der eine vertikale Oszillation vollführt, triggert.

## Claims

1. In a method to measure the filling level of liquid metals in containers, especially in continuous casting moulds, there is provided an array consisting of a primary coil that induces a field, two identical secondary coils, which are connected in oppostion and the liquid metal, where there is induced a voltage in said secondary coils depending on the level of said metal, the method being caracterised in that the primary coil as well as the secondary coils are coaxial with respect to the mould without being in physical contact with the latter, in that one detects the conductivity of the liquid metal in addition to the voltage induced in the secondary coils, and in that one determines the leval of the liquid metal from said voltage as corrected in accordance with the detected conductivity.

2. The method recited in claim 1, caracterised in that the induced fields are oriented towards the liquid metal by providing a U-shaped sheet metal stack surrounding the three coils with the opening of the stack directed towards the mould axis.

3. The method recited in claims 1 and 2, caracterised in that the primary coil is energized intermittently during short periods of time and in that between periods of energization one proceeds to analysing the frequencies and to eliminating those frequencies that stem from background noises.

4. The method recited in claims 1 to 3, caracterised in that one energizes the primary coil with a non-harmonic, rectangular-wave pulse in view of said frequency analysis.

5. The method recited in claims 1 to 4, caracterised in that one triggers the energizing pulse through the position of the lifting table that supports the mould while in vertical oscillation.

## Revendications

1. Procédé de mesure du niveau de remplissage de métaux liquides dans des réservoirs, notamment dans des lingotières de coulée continue, dans lequel procédé on prévoit un arrangement consistant en une bobine primaire qui crée un champ électromagnétique, deux bobines secondaires identiques entre elles et montées en opposition, ainsi que le métal liquide, dans lequel arrangement il est induit dans les bobines secondaires une tension suivant la hauteur du niveau du métal, laquelle tension est mesurée, caractérisé en ce que l'on dispose les bobines primaire et secondaires autour de la lingotière de manière coaxiale et sans qu'il y ait contact physique, que l'on mesure en plus de la tension induite dans les bobines secondaires la conductivité du métal liquide et que l'on détermine la hauteur du niveau suivant la valeur de la tension mesurée, corrigée en fonction de la valeur de la conductivité.

2. Procédé suivant la revendication 1, caractérisé en ce que l'on oriente les champs créés vers le métal liquide en entourant les trois bobines d'un paquet de tôles en forme d'un U ouvert en direction de l'axe.

3. Procédé suivant les revendications 1—2, caractérisé en ce que l'on fait agit le champ primaire de manière intermittente et brièvement et que l'on procède au cours des temps morts à une analyse des fréquences ainsi qi'à l'élimination des bruits de fond parasitaires.

4. Procédé suivant les revendications 1—3, caractérisé en ce qu'en vue de l'analyse à effectuer pour opérer l'élimination des fréquences parasitaires on crée le champ primaire en mettant en oeuvre un courant non-harmonique qui consiste de préférence en des impulsions rectangulaires.

5. Procédé suivant les revendications 1—4, caractérisé en ce que l'on déclenche les impulsions par le truchement de la position de la table d'oscillation qui exécute un mouvement vertical.

FIG.1

FIG.2

FIG.3